# EUROPEAN PATENT APPLICATION

(11) **EP 4 030 771 A1**
(43) Date of publication of application: **20.07.2022**
(21) Application number: 21151871.7
(22) Date of filing: 15.01.2021
(51) Int. Cl.: H04N 21/422, H04N 21/43, H04N 21/439, H04N 21/488, H04N 21/658, H04N 21/81

(54) **A METHOD AND DEVICE FOR CONTENT PRESENTATION**

(71) Applicant: Subreader ApS, 1129 Copenhagen K (DK)
(72) Inventor: THUESEN, Anders Bredgaard, DK-1129 Copenhagen K (DK)
(74) Representative: Aera A/S

(57) **Abstract**

Disclosed is a method, for handling auxiliary content associated with video streams in an audio system comprising an electronic device and a content server. The method comprises obtaining, from the content server, a content fingerprint of an audio track associated with a video stream. The method comprises obtaining a first audio excerpt of the audio track. The method comprises determining an alignment parameter based on the content fingerprint and the first audio excerpt. The method comprises outputting the auxiliary content in accordance with the alignment parameter.

## Description

The present disclosure relates to an electronic device and a method for handling, such as presenting, auxiliary content associated with video streams in an audio system comprising an electronic device and a content server.

### BACKGROUND

The developments in communication technology have provided access to massive amounts of digital content, for example, foreign language movies, documentaries, recorded videos, and computer-generated content (cartoons), via e.g. mobile phones, television, TV, smart TVs, iPad, and similar devices, e.g. via streaming from content providers. However, it may be very difficult for persons who are not able to read and/or understand a foreign language to fully benefit from access to the digital content. For example, children may not be able to follow a foreign language cartoon series just by reading through subtitles. Further, persons who are dyslexic and/or have reduced vision may experience a great difficulty in reading subtitles while watching a foreign language movie or program.

### SUMMARY

Accordingly, there is a need for systems, electronic devices and methods for handling auxiliary content in video to alleviate difficulties faced by users with challenges due to e.g. their age, dyslexia, and/or vision impairments.

Audio systems and related methods are disclosed, the audio system comprises an electronic device and one or more of a content server and a server device. The content server and/or the server device may comprise or have access to a fingerprint database comprising a library of content fingerprints. The server device may be controlled by a service provider. The content server may be controlled by a content provider.

A method for handling auxiliary content associated with video streams in an audio system comprising an electronic device and optionally a content server is disclosed. The method comprises obtaining a first audio excerpt of an audio track associated with a video stream; obtaining, e.g. from the content server or a fingerprint database, a content fingerprint of the audio track; and determining an alignment parameter, e.g. based on the content fingerprint and/or the first audio excerpt. The method comprises outputting the auxiliary content in accordance with the alignment parameter.

Further, an electronic device for handling auxiliary content associated with video streams in an audio system comprising the electronic device is disclosed, the electronic device comprising a processor, memory, and an interface. The processor is configured to obtain a first audio excerpt of an audio track associated with a video stream; obtain a content fingerprint of the audio track; and to determine an alignment parameter based on the content fingerprint and the first audio excerpt. The processor is configured to output the auxiliary content in accordance with the alignment parameter.

Further, the present disclosure provides a method for determining a fingerprint for an audio track. The method comprises dividing the audio track in a plurality of audio frames, each audio frame comprising a number of frequency bands. The method comprises determining a frame parameter for each frequency band of a first audio frame. The method comprises determining a frame parameter for each frequency band of a second audio frame. The method comprises determining a fingerprint value for the second audio frame based on the frame parameters of the first audio frame and the second audio frame; and including the fingerprint value of the second audio frame in the fingerprint.

The present disclosure allows an accurate and aligned presentation of auxiliary content of a video stream to a user. Further, it is an advantage of the present invention that the user does not need to be in control of the playing of the video stream, such as start of the video. A precise and fast alignment of the auxiliary content is provided in turn providing presentation of auxiliary content without delays for provision of improved user experience.

It is an important advantage of the present disclosure that auxiliary content, such as subtitles and/or descriptive text, related to a video stream can be presented to a user via the user's own electronic device thereby allowing other viewers of the video stream to e.g. watch the video stream in the original language.

It is an advantage of the present disclosure that auxiliary content such as subtitles or other textual information is converted to audio and output to a user via an electronic device, such as a smartphone or a tablet computer.

### BRIEF DESCRIPTION OF THE DRAWINGS

The above and other features and advantages of the present disclosure will become readily apparent to those skilled in the art by the following detailed description of exemplary embodiments thereof with reference to the attached drawings, in which:
Fig. 1 schematically illustrate an exemplary audio system comprising an electronic device and a content server according to this disclosure,
Fig. 2A-2B illustrate a flow diagram of an exemplary method for handling auxiliary content associated with video streams according to the disclosure,
Fig. 3 is a flow diagram of an exemplary method for determining a fingerprint for an audio track according to the disclosure, and
Fig. 4 schematically illustrates an exemplary electronic device according to this disclosure.

### DETAILED DESCRIPTION

Various example embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

As discussed in detail herein, the present disclosure relates to an audio system comprises an electronic device and optionally a content server. The audio system comprises one or more of a content server and a server device. The content server may comprise a fingerprint database. The server device may comprise a fingerprint database. The fingerprint database comprises content fingerprints of audio tracks of or associated with video streams, such as movies, series, documentaries, etc. A fingerprint of an audio track or audio excerpt thereof refers in the present context to data derived from the audio track or audio excerpt.

The present disclosure provides a method for handling auxiliary content associated with video streams in an audio system comprising an electronic device and optionally a content server according to the disclosure.

The method comprises obtaining a first audio excerpt also denoted AE_1 of an audio track associated with a video stream. Obtaining a first audio excerpt may comprise starting a first timer or recording a first time stamp to obtain time stamp information indicative of timing of the first audio fingerprint/first audio excerpt. In one or more exemplary methods, the obtaining a first audio excerpt comprises recording/detecting the audio excerpt with a microphone of the electronic device. The obtaining a first audio excerpt may comprise transmitting the first audio excerpt from the electronic device to content server or server device.

The first audio excerpt may have a duration less than 5 minutes, such as less than 4 minutes or less than 2 minutes or even less than 30 seconds.

Examples of a video stream include but is not limited to a movie, e.g. in a movie theatre or on a smart-tv or other display, a documentary, tv-show, tv or streaming series. The video stream may be a streaming of content, a flow-tv, a video-on-demand, and/or a linear television.

The method comprises obtaining, optionally from the content server or fingerprint database, a content fingerprint also denoted CFP of the audio track also denoted AT associated with the video stream.

The content fingerprint may be obtained based on a video stream identifier VS_ID or other information, such as a title, indicative of the video stream. The video stream identifier or other information, such as a title, indicative of the video stream may be input by a user via an interface of the electronic device.

The method comprises determining an alignment parameter also denoted AP based on the content fingerprint and the first audio excerpt. The content fingerprint may be seen as a fingerprint of the audio track. The alignment parameter is indicative of a time offset or position of the first audio excerpt in relation to the audio track in turn allowing timely output of the auxiliary content. In other words, the output of auxiliary content is precisely aligned with the video stream which plays an important role in the user experience.

The method comprises outputting the auxiliary content also denoted AC in accordance with the alignment parameter. Outputting the auxiliary content AC may comprise outputting an audio signal representative of the auxiliary content.

In one or more exemplary methods, determining an alignment parameter based on the content fingerprint and the first audio excerpt comprises determining a first audio fingerprint also denoted AFP_1 of the first audio excerpt also denoted AE_1. The determining a first audio fingerprint may comprise determining the first audio fingerprint with the electronic device, such as with a fingerprint module of the electronic device, and optionally transmitting the first audio fingerprint, e.g. with associated time stamp information indicative of timing of the first audio fingerprint/first audio excerpt, to content server and/or server device. The associated time stamp information indicative of timing of the first audio fingerprint/first audio excerpt may be stored in the electronic device and/or fed to output module, e.g. for determining the alignment parameter. Thus, playback of the auxiliary content may be based on the time since the first audio excerpt was obtained or in other words, the playback of the auxiliary content may be independent on the processing time of fingerprint and time offsets. The first audio fingerprint may be determined with the method for determining a fingerprint for an audio track as disclosed herein. The determining a first audio fingerprint may comprise determining the first audio fingerprint with the content server or server device, such as with a fingerprint module of the content server or server device.

In one or more exemplary methods, the alignment parameter is based on the first audio fingerprint and the content fingerprint.

In one or more exemplary methods, determining an alignment parameter comprises matching the content fingerprint and the first audio fingerprint. Matching the content fingerprint and the first audio fingerprint may comprise performing a cross-correlation function, such as convolutional cross-correlation, on the content fingerprint and the first audio fingerprint, to determine a first time offset for the first audio fingerprint/first audio excerpt in relation to the content fingerprint, in turn providing an indication of timing for the auxiliary content. In other words, matching two fingerprints may comprise applying convolutional cross-correlation to the fingerprints. Determining an alignment parameter may comprise receiving the first time offset from content server/server device and/or determining the alignment parameter based on the first time offset and optionally time stamp information indicative of timing of the first audio fingerprint/first audio excerpt. Thereby, processing resources may be optimized.

In one or more exemplary methods, outputting the auxiliary content comprises playing the auxiliary content, such as playing an audio signal representative of the auxiliary content, via the electronic device. Playing the auxiliary content via the electronic device may comprise playing the auxiliary content with a loudspeaker of the electronic device and/or transmitting the auxiliary content as a wired or wireless audio signal to a headset or one or more earphones.

In one or more exemplary methods, determining an alignment parameter based on the content fingerprint and the first audio excerpt comprises determining the alignment parameter or a first time offset in a server device and transmitting the alignment parameter/first time offset from the server device to the electronic device.

In one or more exemplary methods, determining an alignment parameter based on the content fingerprint and the first audio excerpt comprises determining the alignment parameter in the electronic device, e.g. based on the first time offset and/or time stamp information of the first audio excerpt.

In one or more exemplary methods, determining the alignment parameter comprises determining a first time offset also denoted T_O_1 and optionally a first confidence score also denoted FCS based on the content fingerprint and the first audio excerpt; determining if the first time offset and/or the first confidence score satisfies a criterion; and in accordance with the first time offset and/or the first confidence score satisfying the criterion, determining the alignment parameter based on the first time offset.

In one or more exemplary methods, the method comprises obtaining a second audio excerpt of the audio track and determining the alignment parameter based on the content fingerprint and the second audio excerpt also denoted AE_2. Determining the alignment parameter based on the content fingerprint and the second audio excerpt also denoted AE_2 may comprise determining the alignment parameter based on a second time offset and/or timestamp information of the second audio excerpt.

In one or more exemplary methods, the method comprises, in accordance with the first confidence score not satisfying the criterion, obtaining a second audio excerpt of the audio track; and determining the alignment parameter based on the content fingerprint and the second audio excerpt also denoted AE_2. In other words, a second alignment of the auxiliary content and the audio track may be performed, e.g. based on a determination that the first alignment was not sufficiently accurate.

In one or more exemplary methods, determining an alignment parameter based on the content fingerprint and AE_2 comprises matching the content fingerprint and a second audio fingerprint of AE_2. Matching the content fingerprint and the second audio fingerprint may comprise performing a cross-correlation function, such as convolutional cross-correlation, on the content fingerprint and the second audio fingerprint, to determine a time offset for the second audio fingerprint in relation to the content fingerprint, in turn providing a time offset for the auxiliary content. The alignment parameter may be based on the second time offset of the second audio fingerprint. In one or more exemplary methods, the alignment parameter is based on the content fingerprint and one or both of first audio fingerprint and second audio fingerprint.

The second audio excerpt AE_2 may comprise a recorded audio. The duration of the second audio excerpt may be larger than the duration of the first audio excerpt, such as at least 1.5 times the duration of the first audio excerpt. The second audio excerpt may have a duration less than 5 minutes, such as less than 4 minutes or less than 2 minutes or even less than 30 seconds

In one or more exemplary methods, the auxiliary content is a text content, and wherein outputting the auxiliary content comprises converting the text content to an audio signal also denoted AS, and playing the audio signal via the electronic device.

The method may comprise obtaining, such as receiving, the auxiliary content from the content server and/or the server device. The auxiliary content may be obtained as text content and output as audio. In other words, outputting the auxiliary content may comprise playing audio via the electronic device. The text content, such as subtitles, may be converted to audio with a text-to-speech module of the electronic device. Thus, the method may comprise obtaining, such as receiving, the auxiliary content e.g. as text content from the content provider, and converting the text content to an audio signal, e.g. with a text-to-speech module of the electronic device.

The present disclosure provides an electronic device for handling auxiliary content associated with video streams in an audio system comprising the electronic device, the electronic device comprising a processor, memory, and an interface. The interface may comprise a microphone and/or a wireless transceiver. The electronic device may for example be or comprise a mobile phone, such as a smartphone, a computer, such as a laptop computer or PC, or a tablet computer.

The processor is optionally configured to obtain a content fingerprint of an audio track associated with a video stream. The processor is configured to obtain a first audio excerpt of the audio track, e.g. via a microphone of the electronic device and/or via a microphone of a headset or earpiece wired or wirelessly connected to the electronic device. The processor is configured to determine an alignment parameter based on the content fingerprint and the first audio excerpt.

The processor is configured to output the auxiliary content in accordance with the alignment parameter. The alignment parameter defines or is indicative of a timing of outputting the auxiliary content.

It is to be understood that a description of a feature in relation to method(s) is also applicable to the corresponding feature in electronic device, server device, or content server.

The present disclosure provides a method for determining a fingerprint FP for an audio track. The method comprises dividing the audio track AT in a plurality of audio frames AF_i for i = 1, ..., M, each audio frame comprising K frequency bands. The number K of frequency bands may be 2 or more, such as in the range from 4 to 32, such as in the range from 6 to 12.

The method for determining a fingerprint comprises determining a frame parameter also denoted FP_1_k for each frequency band k = 1, ..., K of a first audio frame, AF_1 or at least a plurality of frequency bands of a first audio frame. An example frame parameter of a frequency band is power of the frequency band. A frame parameter FP_i_n for a k'th frequency band of an i'th audio frame may be represented as power P_i_k, where i = 1, ..., M is i'th audio frame and k=1, ..., K, K being the number of frequency bands.

The method for determining a fingerprint comprises determining a frame parameter FP_2_k for each frequency band k = 1, ..., K of a second audio frame AF_2 or at least a plurality of frequency bands of a second audio frame.

The method for determining a fingerprint comprises determining a fingerprint value FV_2 for the second audio frame based on the frame parameters FP_1_k, k = 1, ..., K of the first audio frame and the frame parameters FP_2_k, k = 1, ..., K of the second audio frame; and including the fingerprint value of the second audio frame in the fingerprint.

The fingerprint value FV_i of an i'th audio frame may be a K-bit value. Each bit FVB_i_k of a fingerprint value FV_i is optionally based on the frame parameter FP_i_k and optionally the corresponding frame parameter FP_i-1_k of the previous audio frame. The fingerprint value of an audio frame may be indicative of a change in frame parameters, such as power or amplitude, of respective frequency bands of the audio frame.

In one or more exemplary methods for determining a fingerprint, determining a fingerprint value FV_i of an audio frame AF_i comprises assigning a "1" to fingerprint value bit FVB_i_k of fingerprint value FV_i if frame parameter FP_i_k is larger than or equal to the frame parameter FP_i-1_k for k = 1, ..., K. In other words, a "1" in a fingerprint value bit FVB_i_k may indicate an increase in the frame parameter in the k'th frequency band.

In one or more exemplary methods for determining a fingerprint, determining a fingerprint value FV_i of an audio frame AF_i comprises assigning a "0" to fingerprint value bit FVB_i_k of fingerprint value FV_i if frame parameter FP_i_k is less than the frame parameter FP_i-1_k. In other words, a "0" in a fingerprint value bit FVB_i_k may indicate an increase in the frame parameter in the k'th frequency band.

In one or more exemplary methods for determining a fingerprint, audio frames of the plurality of audio frames have a frame length also denoted FL in the range from 1 ms to 2 s. The frame length may be in the range from 5 ms to 50 ms, such as in the range from 10 ms to 30 ms. In one or more example methods, the first audio excerpt is sampled with a sample rate in the range from 10 kHz to 50 kHz, such as 44.1 kHz. An audio frame may comprise more than 100 samples, such as at least 1,000 samples. In one or more example methods, audio frames of the plurality of audio frames comprise in the range from 3,000 to 10,000 samples, such as about 8,000 samples (+-10%). Two subsequent audio frames may have an overlap. The overlap may be larger than 20% such as 50%. In other words, the time between start times of two subsequent audio frames may be in the range from 2 ms to 15 ms, such as in the range between 6 ms and 12 ms.

In one or more exemplary methods for determining a fingerprint, audio frames of the plurality of audio frames comprises at least four frequency bands. In other words, audio frames may be divided into at least 4 frequency bands.

In one or more exemplary methods for determining a fingerprint, the fingerprint value is a K-bit value, wherein the number K of bits of the fingerprint value is in the range from 4 to 32.

The figures are schematic and simplified for clarity, and they merely show details which aid understanding the disclosure, while other details have been left out. Throughout, the same reference numerals are used for identical or corresponding parts.

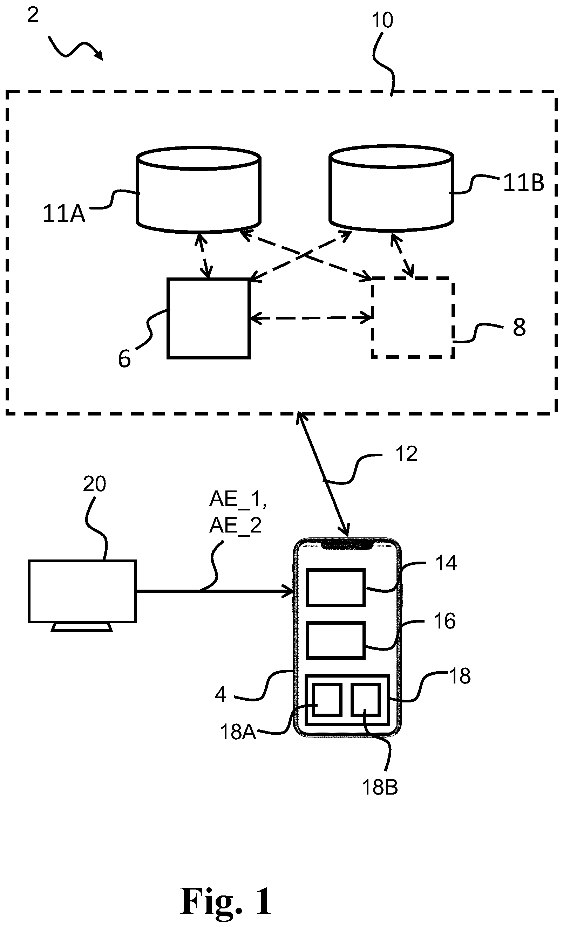

Fig. 1 is a diagram illustrating an exemplary audio system 2 comprising an electronic device 4 and a content server 6 according to this disclosure.

As discussed in detail herein, the present disclosure relates to an audio system 2 comprising an electronic device 4, such as a smartphone, and a content server 6 and/or a server device 8 collectively denoted a server system 10. The audio system 2, such as electronic device 4, may be configured to perform any or parts of the methods disclosed herein. The audio system 2, such as server system 10, comprises a fingerprint database 11A accessible by the content server 6 and/or server device. The fingerprint database comprises a library of content fingerprints. The audio system 2, such as server system 10, comprises a content database 11B accessible by the content server 6 and/or server device 8. The content database 11B comprises auxiliary content, such as text content, associated with or corresponding to video streams.

The electronic device 4 is configured to communicate with server system 10 via a wireless link or connection 12.

The electronic device 4 is configured for handling auxiliary content associated with video streams and comprises a processor 14, memory 16, and an interface 18. The interface comprises microphone 18A and wireless transceiver 18B.

The processor 14 is configured to, via microphone 18A, obtain a first audio excerpt AE_1 of an audio track associated with a video stream VS. The video stream including audio may be output from an output device 20, such as a TV, tablet computer, personal computer, smartphone.

The processor 14 is optionally configured to obtain a content fingerprint CFP of the audio track associated with the video stream, e.g. from the content server or the server device. The content fingerprint CFP may be obtained based on a video stream identifier VS_ID or other information, such as a title, indicative of the video stream. The video stream identifier or other information, such as a title, indicative of the video stream may be input by a user via interface 18 and/or determined by processor 14 based on the first audio excerpt.

The processor 14 is configured to determine an alignment parameter, e.g. based on the content fingerprint and the first audio excerpt. To determine an alignment parameter in the electronic device may comprise to receive a first time offset and/or a second time offset from the server system 10 and determine the alignment parameter based on the first time offset and/or the second time offset. The first time offset may be indicative of a first time offset T_O_1 of the first audio excerpt/first audio fingerprint in relation to the audio track/content fingerprint.

The processor 14 is configured to output the auxiliary content in accordance with the alignment parameter. A text content representing the auxiliary content may be obtained from the content server 6, and to output the auxiliary content in accordance with the alignment parameter optionally comprises converting the text content to audio content or audio signal and playing the audio signal via the electronic device, e.g. as audio via a loudspeaker or audio connector of interface 18 or as an audio stream via the wireless transceiver 18B to a headset or earpieces connected to the electronic device 4.

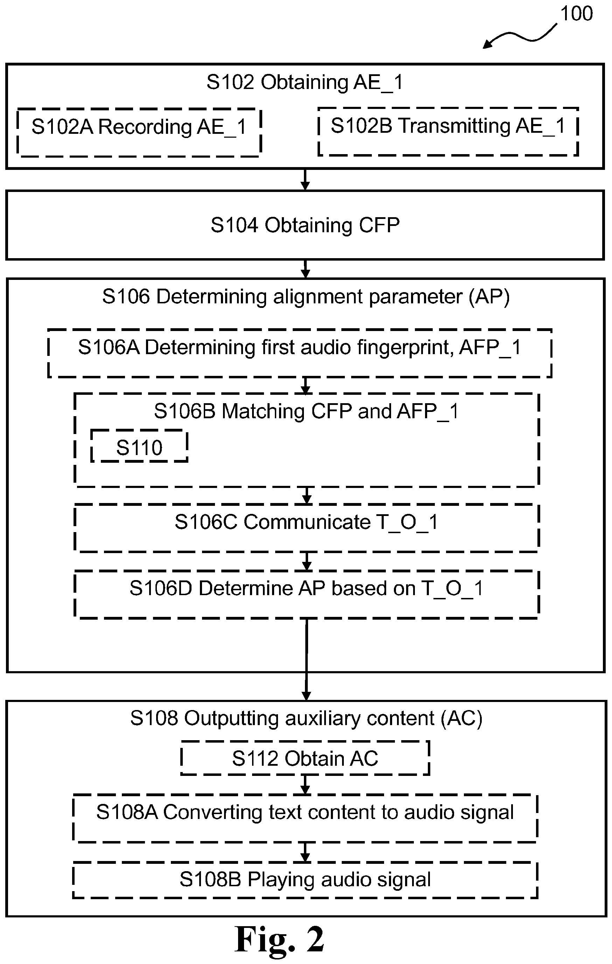

The electronic device 4 is optionally configured to perform any of the operations disclosed in Fig. 2, such as any one or more of or parts of S102, S102A, S102B, S104A, S106A, S106B, S106C, S106D, S108, S108A, S108B, S110, S112. The operations of the electronic device 4 may be embodied in the form of executable logic routines (for example, lines of code, software programs, etc.) that are stored on a non-transitory computer readable medium (for example, memory 16) and are executed by processor 14).

Furthermore, the operations of the electronic device 4 may be considered a method that the electronic device 4 is configured to carry out. Also, while the described functions and operations may be implemented in software, such functionality may as well be carried out via dedicated hardware or firmware, or some combination of hardware, firmware and/or software.

Memory 16 may be one or more of a buffer, a flash memory, a hard drive, a removable media, a volatile memory, a non-volatile memory, a random access memory (RAM), or other suitable device. In a typical arrangement, memory 16 may include a non-volatile memory for long term data storage and a volatile memory that functions as system memory for processor 14. Memory 16 may exchange data with processor 14 over a data bus. Control lines and an address bus between memory 16 and processor 14 also may be present (not shown in Fig. 1). Memory 16 is considered a non-transitory computer readable medium.

The memory 16 may be configured to store information, such as content fingerprint, an audio track, a video stream, one or more audio excerpts, one or more audio fingerprints of audio excerpts, time stamp information of audio excerpt(s), one or more time offsets an alignment parameter, and an auxiliary content (e.g. as text content) in a part of the memory. Auxiliary content (text content) may be retrieved from content server and stored in the memory.

Fig. 2 shows a flow diagram of an exemplary method 100, for handling auxiliary content associated with video streams in an audio system comprising an electronic device and a content server according to the disclosure.

The method 100 comprises obtaining S102 a first audio excerpt AE_1 of an audio track associated with a video stream. The obtaining 102 comprises recording S102A the first audio excerpt with microphone of the electronic device and optionally transmitting S102B the first audio excerpt to the content server or the server device. The first audio excerpt may have a duration of in the range from 5 seconds to 5 minutes.

The method 100 comprises obtaining S104, e.g. from the content server, server device, and/or fingerprint database, a content fingerprint (CFP) of the audio track.

The method 100 comprises determining S106 an alignment parameter, such as time offset, based on the content fingerprint and the first audio excerpt. Determining S106 an alignment parameter based on the content fingerprint and the first audio excerpt optionally comprises determining S106A, e.g. in the electronic device, in the server device, or in the content server, a first audio fingerprint of the first audio excerpt, e.g. by using a method for determining a fingerprint for an audio track as described herein.

Determining S106 an alignment parameter based on the content fingerprint and the first audio excerpt comprises matching S106B the content fingerprint and the first audio fingerprint. Matching S106B the content fingerprint and the first audio fingerprint may comprise performing S110 a cross-correlation function, such as convolutional cross-correlation, on the content fingerprint and the first audio fingerprint, to determine a first time offset T_O_1 for the first audio fingerprint/first audio excerpt in relation to the content fingerprint, in turn providing an indication of timing for the auxiliary content. In other words, matching two fingerprints may comprise applying convolutional cross-correlation to the content fingerprint and the first audio fingerprint. Determining S106 the alignment parameter may comprise communicating S106C, between the electronic device and content server/server device, the first time offset and/or determining S106D, e.g. in the electronic device, the alignment parameter based on the first time offset and optionally time stamp information indicative of timing of the first audio fingerprint/first audio excerpt. Thereby, processing resources may be optimized.

The method 100 comprises outputting S108 the auxiliary content in accordance with the alignment parameter. The method 100 comprises obtaining S112, such as receiving, the auxiliary content, e.g. as text content, from the content server and/or the server device, e.g. as part of S108 as illustrated or as part of obtaining S104 CFP. The auxiliary content may be obtained as text content, e.g. from the content server or server device, and output as audio. In other words, outputting S108 the auxiliary content may comprise converting S108A, e.g. with text-to-speech module of processor in electronic device, text content of auxiliary content to an audio signal, and playing S108B the audio signal representative of the auxiliary content via the electronic device, e.g. via loudspeaker of electronic device and/or wireless audio streaming to headphones/earpieces.

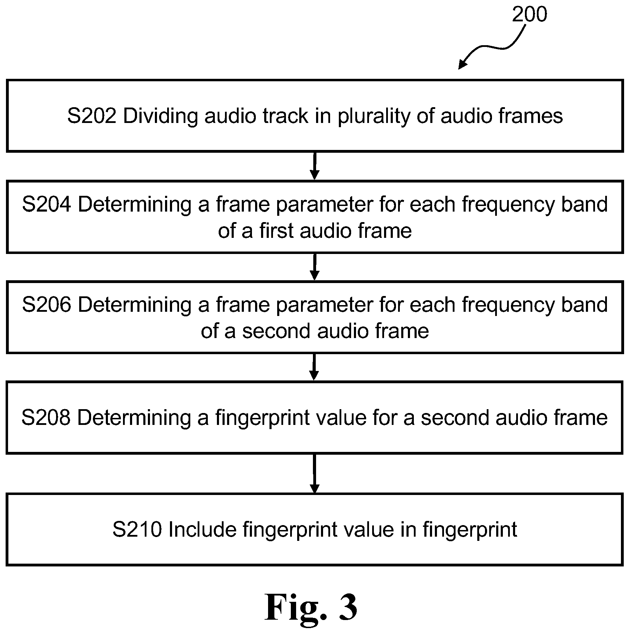

Fig. 3 shows a flow diagram of an exemplary method 200, for determining a fingerprint for an audio track according to the disclosure.

The method 200 comprises dividing S202 the audio track in a plurality of audio frames, each audio frame having a frame length in the range from 1 ms to 2 s and comprising at least four, such as eight, frequency bands, determining S204 a frame parameter, such as power or amplitude, for each frequency band of a first audio frame; determining S206 a frame parameter, such as power or amplitude, for each frequency band of a second audio frame; determining S208 a fingerprint value, such as an 8-bit value, for the second audio frame based on the frame parameters of the first audio frame and the second audio frame; and including S210 the fingerprint value of the second audio frame in the fingerprint. The method 200 may be used for determining the first audio fingerprint in the method, such as method 100, for handling auxiliary content as described herein.

Embodiments of methods and products (electronic device, content server) according to the disclosure are set out in the following items:
Item 1. A method for handling auxiliary content associated with video streams in an audio system comprising an electronic device and a content server, the method comprising:
   obtaining, from the content server, a content fingerprint of an audio track associated with a video stream;
   obtaining a first audio excerpt of the audio track;
   determining an alignment parameter based on the content fingerprint and the first audio excerpt; and
   outputting the auxiliary content in accordance with the alignment parameter.
Item 2. Method according to item 1, wherein determining an alignment parameter based on the content fingerprint and the first audio excerpt comprises determining an audio fingerprint of the first audio excerpt, and wherein the alignment parameter is based on the audio fingerprint and the content fingerprint.
Item 3. Method according to item 2, wherein determining an alignment parameter comprises matching the content fingerprint and the audio fingerprint.
Item 4. Method according to any of items 1-3, wherein outputting the auxiliary content comprises playing the auxiliary content via the electronic device.
Item 5. Method according to any of items 1-4, wherein obtaining the first audio excerpt of the audio track comprises recording the first audio excerpt with a microphone of the electronic device.
Item 6. Method according to any of items 1-5, wherein determining an alignment parameter based on the content fingerprint and the first audio excerpt comprises determining the alignment parameter in a server device and transmitting the alignment parameter from the server device to the electronic device.
Item 7. Method according to any of items 1-5, wherein determining an alignment parameter based on the content fingerprint and the first audio excerpt comprises determining the alignment parameter in the electronic device.
Item 8. Method according to any of items 1-7, wherein determining the alignment parameter comprises determining a first time offset and a first confidence score based on the content fingerprint and the first audio excerpt; determining if the first confidence score satisfies a criterion; and in accordance with the first confidence score satisfying the criterion, setting the alignment parameter to the first time offset.
Item 9. Method according to item 8, wherein the method comprises, in accordance with the first confidence score not satisfying the criterion, obtaining a second audio excerpt of the audio track; and determining the alignment parameter based on the content fingerprint and the secondary audio excerpt.
Item 10. Method according to any of items 1-9, wherein the auxiliary content is a text content, and wherein outputting the auxiliary content comprises converting the text content to an audio signal and playing the audio signal via the electronic device.
Item 11. Electronic device for handling auxiliary content associated with video streams in an audio system comprising the electronic device, the electronic device comprising a processor, memory, and an interface, wherein the processor is configured to
   obtain a content fingerprint of an audio track associated with a video stream;
   obtain a first audio excerpt of the audio track;
   determine an alignment parameter based on the content fingerprint and the first audio excerpt; and
   output the auxiliary content in accordance with the alignment parameter.
Item 12. A method for determining a fingerprint for an audio track, the method comprising dividing the audio track in a plurality of audio frames, each audio frame comprising a number of frequency bands;
   determining a frame parameter for each frequency band of a first audio frame, determining a frame parameter for each frequency band of a second audio frame; determining a fingerprint value for the second audio frame based on the frame parameters of the first audio frame and the second audio frame; and including the fingerprint value of the second audio frame in the fingerprint.
Item 13. Method according to item 12, wherein audio frames of the plurality of audio frames have a frame length in the range from 1 ms to 2 s, such as in the range from 10 ms to 30 ms, e.g. 18 ms.
Item 14. Method according to any of items 12-13, wherein audio frames of the plurality of audio frames comprises at least four frequency bands.
Item 15. Method according to any of items 12-14, wherein the fingerprint value is a k-bit value, wherein the number k of bits of the fingerprint value is in the range from 4 to 32.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It may be appreciated that Figs. 1-3 comprises some circuitries or operations which are illustrated with a solid line and some circuitries or operations which are illustrated with a dashed line. Circuitries or operations which are comprised in a solid line are circuitries or operations which are comprised in the broadest example embodiment. Circuitries or operations which are comprised in a dashed line are example embodiments which may be comprised in, or a part of, or are further circuitries or operations which may be taken in addition to circuitries or operations of the solid line example embodiments. It should be appreciated that these operations need not be performed in order presented. Furthermore, it should be appreciated that not all of the operations need to be performed. The example operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the example embodiments may be implemented at least in part by means of both hardware and software, and that several "means", "units" or "devices" may be represented by the same item of hardware.

The various example methods, devices, nodes and systems described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program circuitries may include routines, programs, objects, components, data structures, etc. that perform specified tasks or implement specific abstract data types. Computer-executable instructions, associated data structures, and program circuitries represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

### LIST OF REFERENCES

- 2: audio system
- 4: electronic device
- 6: content server
- 8: server device
- 10: server system
- 12: communication link
- 14: processor
- 16: memory
- 18: interface
- 18A: microphone
- 18B: wireless transceiver
- 20: output device
- AC: auxiliary content
- AE_1: first audio excerpt
- AE_2: second audio excerpt
- AF: audio frames
- AF_1: first audio frame
- AF_2: second audio frame
- AFP: audio fingerprint
- AFP_1: first audio fingerprint of AE_1
- AFP_2: second audio fingerprint of AE_2
- AP: alignment parameter
- AT: audio track
- AS: audio signal
- CFP: content fingerprint
- FB: frequency bands
- CS_1: first confidence score
- FL: frame length
- FP_1_k, k = 1, ..., K: frame parameters of AF_1
- FP_2_k, k = 1, ..., K: frame parameters of AF_2
- T_O_1: first time offset
- T_O_2: second time offset
- S102: obtaining first audio excerpt
- S102A: recording AE_1
- S102B: transmitting AE_1
- S104: obtaining content fingerprint
- S106: obtaining alignment parameter (AP)
- S106A: determining first audio fingerprint (AFP_1)
- S106B: matching CFP and AFP_1
- S106C: communicating the first time offset
- S106D: determining the alignment parameter based on the first time offset
- S108: outputting auxiliary content
- S108A: converting text content to audio signal
- S108B: playing audio signal via electronic device
- S110: performing a cross-correlation function
- S112: obtaining auxiliary content
- 200: method for determining a fingerprint for an audio track/audio excerpt
- S202: dividing audio track from plurality of audio frames
- S204: determining a frame parameter for each frequency band of a first audio frame
- S206: determining a frame parameter for each frequency band of a second audio frame
- S208: determining a fingerprint value for a second audio frame
- S210: including fingerprint value of second audio frame in fingerprint

## Claims

1. A method for handling auxiliary content associated with video streams in an audio system comprising an electronic device and a content server, the method comprising:
obtaining a first audio excerpt of an audio track associated with a video stream;
obtaining, from the content server, a content fingerprint of the audio track;
determining an alignment parameter based on the content fingerprint and the first audio excerpt; and
outputting the auxiliary content in accordance with the alignment parameter.

2. Method according to claim 1, wherein determining an alignment parameter based on the content fingerprint and the first audio excerpt comprises determining a first audio fingerprint of the first audio excerpt, and wherein the alignment parameter is based on the first audio fingerprint and the content fingerprint.

3. Method according to claim 2, wherein determining an alignment parameter comprises matching the content fingerprint and the first audio fingerprint.

4. Method according to any of claims 1-3, wherein outputting the auxiliary content comprises playing the auxiliary content via the electronic device.

5. Method according to any of claims 1-4, wherein obtaining the first audio excerpt of the audio track comprises recording the first audio excerpt with a microphone of the electronic device.

6. Method according to any of claims 1-5, wherein determining an alignment parameter based on the content fingerprint and the first audio excerpt comprises determining the alignment parameter in a server device and transmitting the alignment parameter from the server device to the electronic device.

7. Method according to any of claims 1-5, wherein determining an alignment parameter based on the content fingerprint and the first audio excerpt comprises determining the alignment parameter in the electronic device.

8. Method according to any of claims 1-7, wherein determining the alignment parameter comprises determining a first time offset and a first confidence score based on the content fingerprint and the first audio excerpt; determining if the first confidence score satisfies a criterion; and in accordance with the first confidence score satisfying the criterion, determining the alignment parameter based on the first time offset.

9. Method according to claim 8, wherein the method comprises, in accordance with the first confidence score not satisfying the criterion, obtaining a second audio excerpt of the audio track; and determining the alignment parameter based on the content fingerprint and the second audio excerpt.

10. Method according to any of claims 1-9, wherein the auxiliary content is a text content, and wherein outputting the auxiliary content comprises converting the text content to an audio signal and playing the audio signal via the electronic device.

11. Electronic device for handling auxiliary content associated with video streams in an audio system comprising the electronic device, the electronic device comprising a processor, memory, and an interface, wherein the processor is configured to
obtain a first audio excerpt of an audio track associated with a video stream;
obtain a content fingerprint of the audio track;
determine an alignment parameter based on the content fingerprint and the first audio excerpt; and
output the auxiliary content in accordance with the alignment parameter.

12. A method for determining a fingerprint for an audio track, the method comprising
dividing the audio track in a plurality of audio frames, each audio frame comprising a number of frequency bands;
determining a frame parameter for each frequency band of a first audio frame,
determining a frame parameter for each frequency band of a second audio frame;
determining a fingerprint value for the second audio frame based on the frame
parameters of the first audio frame and the second audio frame; and
including the fingerprint value of the second audio frame in the fingerprint.

13. Method according to claim 12, wherein audio frames of the plurality of audio frames have a frame length in the range from 1 ms to 2 s.

14. Method according to any of claims 12-13, wherein audio frames of the plurality of audio frames comprises at least four frequency bands.

15. Method according to any of claims 12-14, wherein the fingerprint value is a K-bit value, wherein the number K of bits of the fingerprint value is in the range from 4 to 32.
